# EUROPEAN PATENT APPLICATION

(11) **EP 2 241 525 A1**
(43) Date of publication of application: **20.10.2010**
(21) Application number: 10159653.4
(22) Date of filing: 12.04.2010
(51) Int. Cl.: B65H 37/00, C09J 7/00

(54) **Adhesive sheet and transfer tool**

(30) Priority: 13.04.2009 JP 2009097142
(71) Applicant: Kokuyo CO., LTD., Osaka-shi, Osaka 537-8686 (JP)
(72) Inventor: Kai, Keiji, Osaka-shi Osaka 537-8686 (JP); Kawashita, Kazushige, Osaka-shi Osaka 537-8686 (JP); Kasahara, Hiroyuki, Osaka-shi Osaka 537-8686 (JP)
(74) Representative: TBK-Patent

(57) **Abstract**

The adhesive sheet according to the present invention includes a sheet body, and a geometry adhesive portion forming geometry of a letter or a figure by aggregating and arranging adhesive dots different in dot diameter, which are intermittently applied onto the sheet body. Moreover, the adhesive sheet includes a background adhesive portion made of the adhesive dots intermittently arranged around the geometry adhesive portion.

## Description

### BACKGROUND OF THE INVENTION

### 1. Field of the Invention

The present invention relates to an adhesive sheet to transfer an adhesive for sticking various types of paper such as an envelope, or to stick itself to various types of paper.

### 2. Description of the Related Art

Conventionally, adhesive sheets have been often used as products in which an adhesive is applied to a sheet body as a base material for a clerical purpose. Such adhesive sheets are roughly divided into two types. One is an adhesive sheet of an aspect in which the sheet body itself is attached to various types of paper or the like in a state where the sheet body and the adhesive are undetachably stuck in advance. Specific examples of the foregoing include an adhesive tape, an adhesive seal and the like. As the other type, an adhesive sheet is configured such that the sheet body is detachable with respect to the adhesive, and two adherends can be stuck via the adhesive. Specific examples of the foregoing include a pressure-sensitive transfer type adhesive tape commercially available as a so-called "tape paste". Such a pressure-sensitive transfer tape is generally mounted on a transfer tool in a state wound into a roll, and handled in a state where only a desired length thereof can be preferably transferred.

In recent years, particularly among adhesive sheets falling under the latter type, there has been suggested an adhesive sheet that can resolve a defect that the adhesive in filaments adheres to the vicinity of a transfer end when the adhesive is transferred to a required area in an adherend, and in addition, can also resolve a defect that an air bubble is formed between the adhesive and the adherend, thereby forming a wrinkle in the stuck adherend.

In a detailed description of such an adhesive sheet, the adhesive sheet is made up of a sheet body and adhesive dots intermittently applied to the sheet body (e.g., refer to Japanese Patent Application Laid-Open No. 2006-206657). In such an adhesive sheet, when the adhesive is transferred to the adherend, air in the vicinity of the adherend is released through spaces between the adhesive dots during the sticking work, by which the formation of the foregoing air bubble and wrinkle can be effectively avoided. In addition, since the adhesive is transferred on a basis of the adhesive dot, a defect that the adhesive is awkwardly extended at the transfer end is resolved, and in other words, the adhesive sheet is excellent in glue cutting.

After the adhesive sheet as described in Japanese Patent Application Laid-Open No. 2006-206657 has been disclosed, various adhesive sheets in which an adhesive is arranged intermittently on a sheet body have been suggested so far (e.g., refer to Japanese Utility Model No. 3125301).

### SUMMARY OF THE INVENTION

In the present situation, there has been demanded an adhesive sheet that is further given totally new characteristics, so as to improve marketability and meet totally new needs, which can be added-value besides the above-described substantive effects regarding the transfer working.

The present invention focuses on the above-described problems, and an object thereof is to provide an adhesive sheet that are given totally new characteristics so that further added-value is given to the adhesive sheet and totally new needs are met.

The present invention takes the following means in order to achieve the above-described object. That is, an adhesive sheet according to the present invention includes a sheet body and adhesive dots each of which is a dot-shaped adhesive, wherein a geometry adhesive portion forming geometry of a letter or a figure by aggregating and arranging the adhesive dots different in dot diameter is provided on the sheet body.

Here, the figure of the "letter or figure" is not limited to geometry indicating a certain idea content which allows a user to recall some meaning, but has a concept that various types of geometry are included.

By aggregating the adhesive dots different in dot diameter and forming various letter and figures on the sheet body, the above-described adhesive sheet gives non-conventional performance to a product, such as encouraging the user to buy the product, communicating a specific message to the user, and the like, which can give further added-value to the product itself or meet totally new needs. Particularly, according to the present invention, combining the adhesive dots different in dot diameter allows the letter and the figure to be represented more clearly and abundantly.

In order to allow the user to more clearly recognize the geometry adhesive portion, it is desirable that the geometry of the letter or the figure is formed by the adhesive dots themselves.

In order to enable sticking force, which is basic performance as the adhesive sheet, to be sufficiently secured while causing the user to recognize the letter or the figure, it is preferable that the adhesive sheet further includes a background adhesive portion made of the adhesive dots intermittently arranged around the geometry adhesive portion on the sheet body.

In this case, in order to secure the sticking force in such a manner that the user is caused to clearly recognize the existence of the geometry adhesive portion by making the existence of the background adhesive portion as inconspicuous as possible, it is preferable that the background adhesive portion has a so-called simple pattern, in which the adhesive dots having a single dot diameter are arranged at regular intervals.

In order to enable the geometry adhesive portion to be actually formed clearly, and in order to enable an excellent glue cutting property to be secured, it is preferable that the dot diameter is set to 0.5 mm to 3 mm. If the dot diameter is smaller than 0.5 mm, it is difficult to cause the user to clearly recognize the dots as dots, and if the dot diameter is larger than 3 mm, the excellent glue cutting property cannot be secured.

Here, as a result of focusing on the point that some clear intention is transmitted to the user by the geometry adhesive portion as described above, the adhesive sheet according to the present invention includes a sheet body and adhesive dots each of which is a dot-shaped adhesive, wherein a geometry adhesive portion in which geometry of a letter or an illustration is depicted by aggregating and arranging adhesive dots is provided on the sheet body.

The term "illustration" has a concept of indicating, in the figures having geometry other than letters, only one that allows the user who sees it to recall some meaning, that is, a certain idea content by its geometry. In other words, the term "illustration" has a concept of excluding letters from a term "symbols" defined as "a collective term of letters, signs and the like for indicating certain idea contents" in Kojien. Moreover, in Kojien, "moreover, particularly, a class of signs is referred to as in distinction from letters" is described. That is, the term "illustration" described herein is synonymous with the "class of signs". Thus, the concept of the "letter or illustration" is synonymous with the "symbol" defined in Kojien.

On the other hand, the geometry adhesive portion according to the present invention is not limited to one in which the letter or the figure can be formed by the adhesive dots themselves. That is, the adhesive sheet according to the present invention includes a sheet body and adhesive dots each of which is a dot-shaped adhesive, wherein a geometry adhesive portion forming geometry of a letter or a figure by aggregating and arranging the adhesive dots is provided on the sheet body, and the geometry adhesive portion forms the letter or the figure by aggregating the adhesive dots only in a circumference of a virtual region corresponding to the letter or the figure.

The above-described adhesive sheet, similarly to the above-described adhesive sheet, allows the user to clearly recognize the letter or the figure.

In a configuration to realize provision of a transfer tool of an aspect in which the adhesive sheet of the present invention can seal an envelope and stick a pair of adherends to each other, it is required that the adhesive dots are applied detachably with respect to the sheet body.

That is, a transfer tool according to the present invention includes the adhesive sheet having any one of the above-described configurations.

On the other hand, obviously, the adhesive sheet of the present invention is not limited to the foregoing aspects, but an adhesive sheet having a configuration applicable to a typical adhesive tape or seal. That is, a configuration in which the adhesive dots are applied undetachably with respect to the sheet body can also effectively exert the above-described effects.

According to the present invention, by aggregating the adhesive dots and forming various letters and figures on the sheet body, there can be provided an adhesive sheet that gives non-conventional performance to a product, such as encouraging a user to buy the product, communicating a specific message indicating a certain idea content to the user using the adhesive dots, and the like, whereby further added-value can be given to the product itself, and totally new needs can be met.

### BRIEF DESCRIPTION OF THE DRAWINGS

Fig. 1 is an appearance view showing essential portions of an adhesive sheet and a transfer tool according to one embodiment of the present invention;
Fig. 2 is a perspective view showing the transfer tool according to the embodiment;
Fig. 3 is a perspective view showing the adhesive sheet of the embodiment;
Fig. 4 is a plan view showing adhesive dots in the same adhesive sheet;
Figs. 5A and 5B are plan views each showing adhesive dots in the adhesive sheet;
Figs. 6A and 6B are plan views each showing adhesive dots in the adhesive sheet;
Figs. 7A to 7C are plan views each showing adhesive dots in the adhesive sheet;
Fig. 8 is a plan view showing adhesive dots in the adhesive sheet;
Figs. 9A and 9B are plan views each showing adhesive dots according to a modification of the adhesive sheet; and
Fig. 10 is an appearance view according to another embodiment of the present invention.

### DESCRIPTION OF THE PREFERRED EMBODIMENTS

### <First Embodiment>

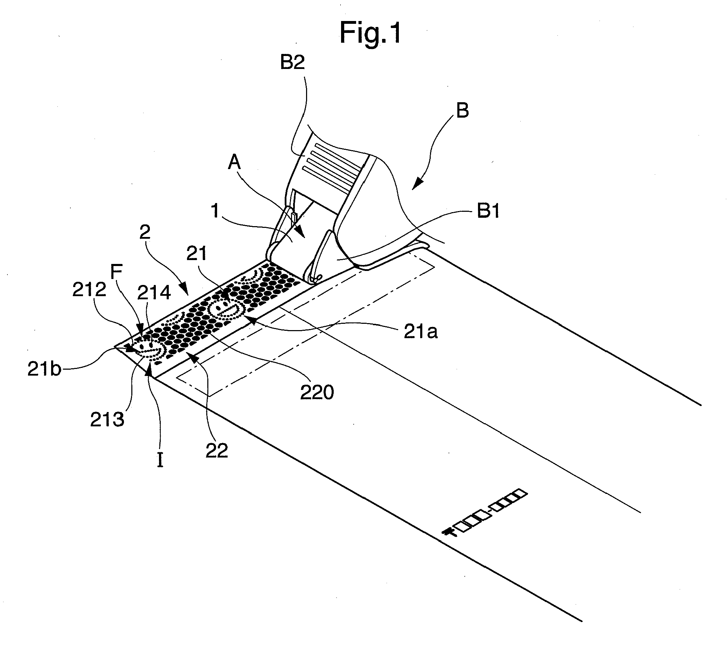

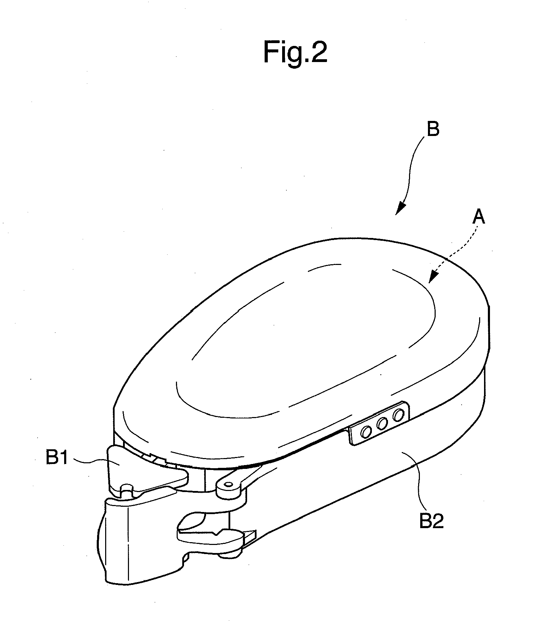

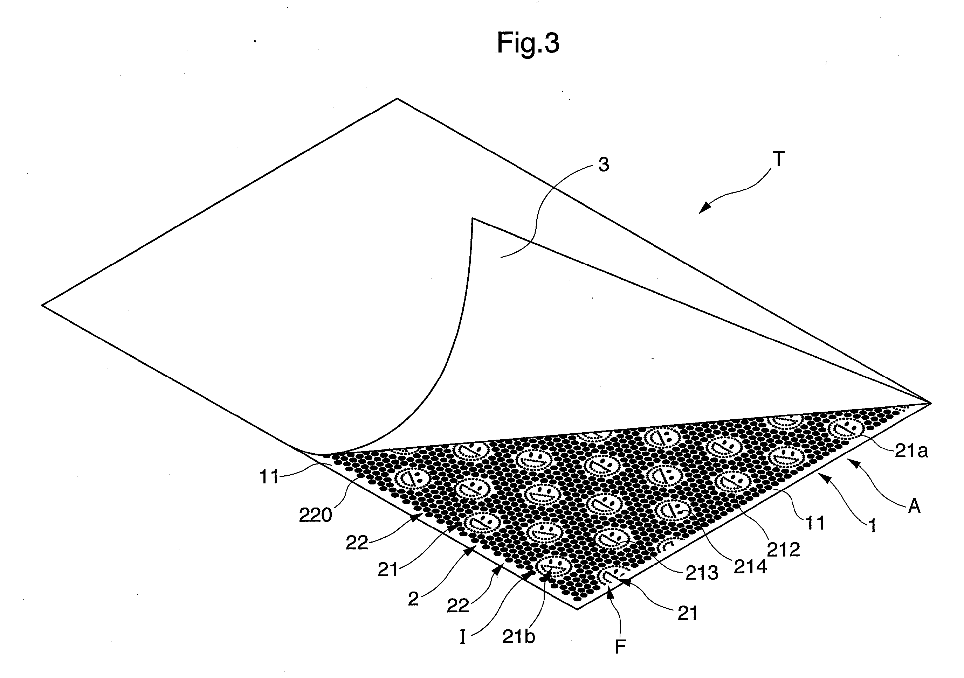

Hereinafter, a transfer tool B including an adhesive sheet A according to a first embodiment of the present invention is described with reference to Figs. 1 and 2, and a transfer sheet T including the adhesive sheet A is described with reference to Fig. 3.

The adhesive sheet A according to the present invention constituting these transfer tool B and transfer sheet T essentially has a sheet body 1, and adhesive dots 2 applied onto the sheet body 1 intermittently and detachably.

This transfer tool B, as shown in Figs. 1 and 2, is a typical transfer tool including a refill B1 that contains the adhesive sheet A cut into an elongated shape in a wound-up state, and a transfer tool body B2 that has the refill B1 mounted thereon and can preferably send out the adhesive sheet A. Fig. 1 shows a situation where the transfer tool B is transferring the adhesive dots 2 described later to a transferred surface of an adherend made of paper, for example, such as a folded-back piece of an envelope. While as the transfer tool B according to the present embodiment, a so-called refill exchange type transfer tool is illustrated, in which the transfer body B2 can be continuously used by exchanging the refill as described above, obviously, a so-called single use type transfer tool B may be employed, in which the adhesive sheet A is directly contained in the transfer tool body B2.

On the other hand, the transfer sheet T as shown in Fig. 3 includes the adhesive sheet A according to the present embodiment having the sheet body 1 cut into a rectangle, the adhesive dots 2 applied onto the sheet body 1, and a covering sheet 3 that covers the adhesive dots 2. Moreover, the transfer sheet T further has, in a circumferential edge portion of the sheet body 1, a dry edge portion 11 where the adhesive dots 2 are not applied. As to this transfer sheet T, while an aspect in which the one covering sheet 3 is included for the one sheet body 1 is illustrated, obviously, there may be employed an aspect in which the plurality of adhesive sheets A layered by layering the sheet body 1 of another adhesive sheet A on the adhesive dots 2, and the one covering sheet 3 that covers the adhesive dots 2 on the top adhesive sheet A are included.

Here, the adhesive sheet A according to the present invention, as shown in Figs. 1, 3 and 4, includes the foregoing sheet body 1, and geometry adhesive portions 21 that each form a letter L or a figure F by aggregating and arranging the adhesive dots 2 different in dot diameter, which are applied intermittently onto the sheet body 1. That is, the adhesive sheet A is characterized in that the geometry adhesive portions 21 are provided on the sheet body 1. In the present embodiment, the adhesive sheet A further including a background adhesive portion 22 made of the adhesive dots 2 intermittently arranged around the geometry adhesive portions 21 is shown in Figs. 1, 3, 4 and 7.

Hereinafter, for a specific structure and configuration of the adhesive sheet A according to the present embodiment, particularly, configurations of the geometry adhesive portions 21 and the background portion 22 made of the adhesive dots 2 are described in detail.

While the sheet body 1 used for the transfer tool B shown in Figs. 1 and 2 is made of a polyethylene terephthalate (PET) film detachable with respect to the adhesive dots 2, it is not limited to the polyethylene terephthalate, but any material detachable with respect to the adhesive dots 2 may be used. The materials having detachability with respect to an acrylic adhesive include: a plastic film of polyethylene (PE), polypropylene (PP), polyvinyl chloride (PVC) or the like, paper of glassine paper or the like, metal foil and the like. On the other hand, for the sheet body 1 used for the transfer sheet T shown in Fig. 3, there is employed, for example, a sheet body in which a detachment layer made of silicon resin, fluorine resin or the like is provided to give a detachment effect to a surface of paper with no detachment effect.

The adhesive dots 2, in the present embodiment, are made of an acrylic emulsion type adhesive, for example. Moreover, the adhesive dots 2 are intermittently subjected to pattern application as described later to the sheet body 1 by using an existing printing method such as screen printing, gravure printing, offset printing, and flexographic printing, for example. Moreover, in the present embodiment, a thickness dimension of the adhesive dots 2 is set to 30 µm, for example.

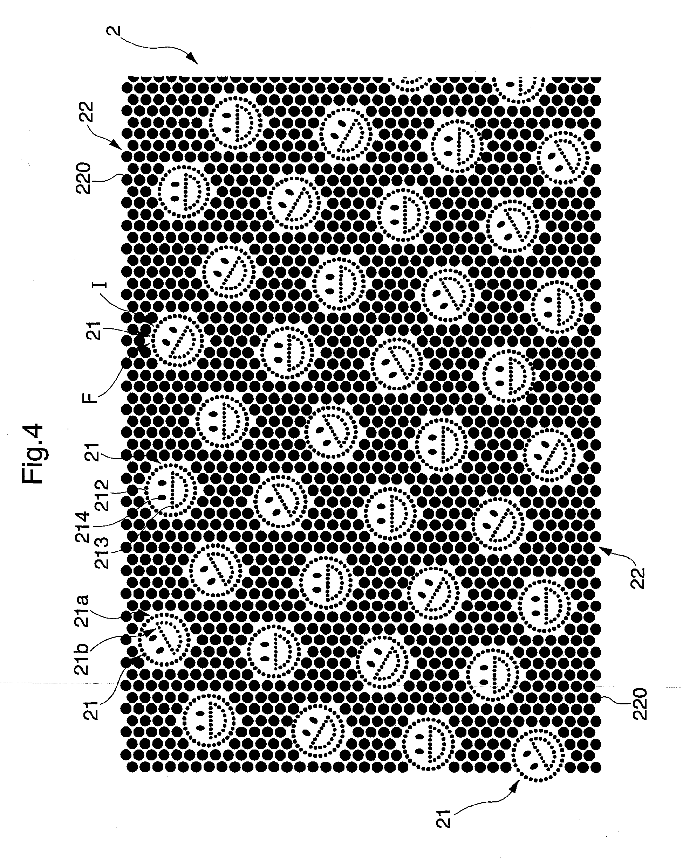

As to each of the geometry adhesive portions 21, in the present embodiment, geometry of the figure F as shown in Figs. 4 to 8 is formed by aggregation itself of the adhesive dots 2, and in these figures, the adhesive dots 2 with diameters in a range of 0.5 mm to 3 mm, that is, large dots 211 with a dot diameter of 1 mm, intermediate dots 212 with a dot diameter of 0.75 mm, small dots 213 with a dot diameter of 0.5 mm, and oval dots 214 having an oval shape in Fig. 3 are closely arranged as needed to thereby form curved portions 21a, and linear portions 21b, which allows the geometry of the image and figure F to be depicted. In the present embodiment, in the illustrated figure F, an illustration I indicating a certain idea is formed.

The background adhesive portion 22 is made of the adhesive dots 2 arranged intermittently around the geometry adhesive portions 21 on the sheet body 1, and in the present embodiment, the background adhesive portion 22 has uniform dots 220 with a dot diameter of 1.5 mm arranged at regular intervals.

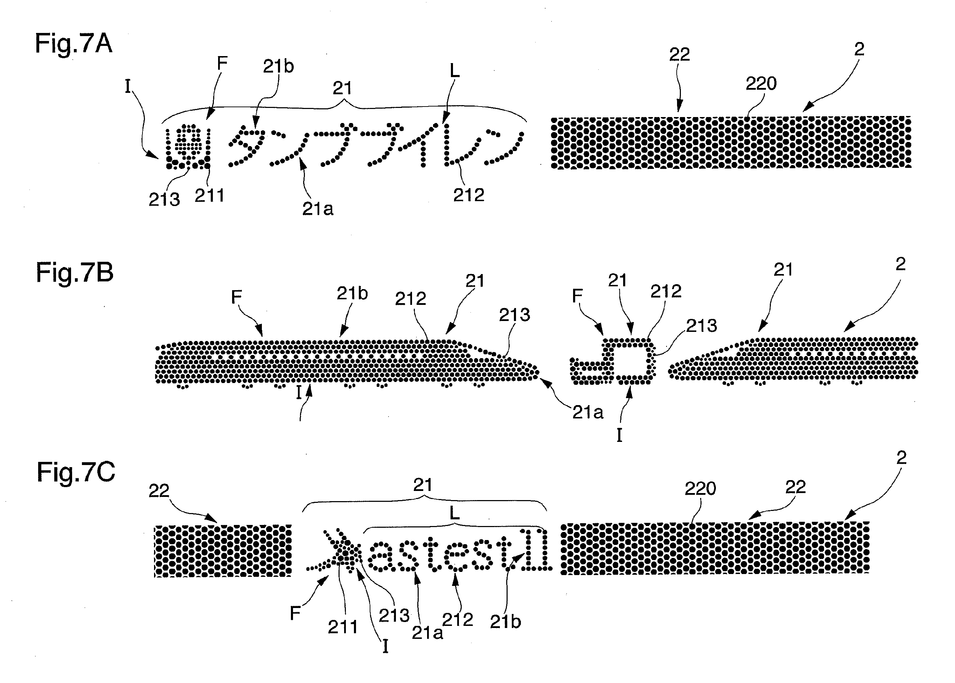

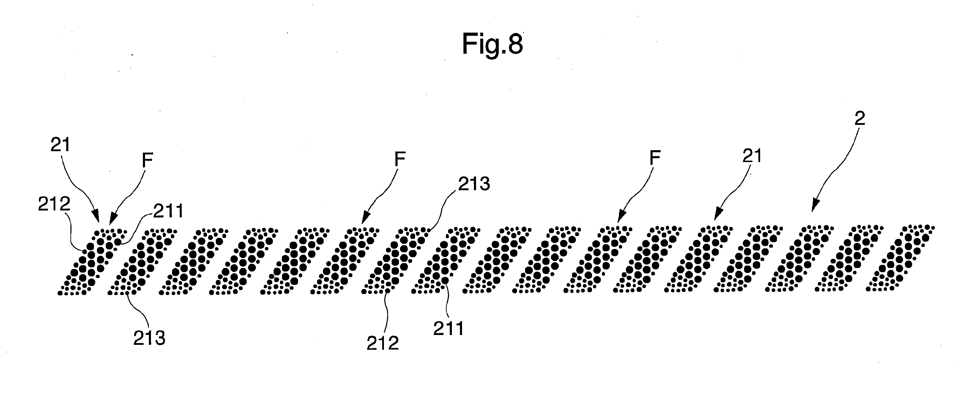

Thus, in the adhesive sheet A according to the present embodiment, by appropriately arranging the adhesive dots 2 as described above, there may be provided the geometry adhesive portions 21 having various types of geometry indicating the figures F forming the illustrations I as shown in Figs. 4 to 6, the letters L as shown in Fig. 7, and the figure F as shown in Fig. 8.

In each of the geometry adhesive portions 21 as shown in Fig. 4, the intermediate dots 212 form a "profile" by the curved portion 21a arranged circularly, and the oval dots 214 and the small dots 213 forming the linear portion 21b and/or the curved portion 21a are arranged so that "eyes" and a "mouth" can be recalled, by which the figure F and illustration I schematically representing "a smiling face" is formed.

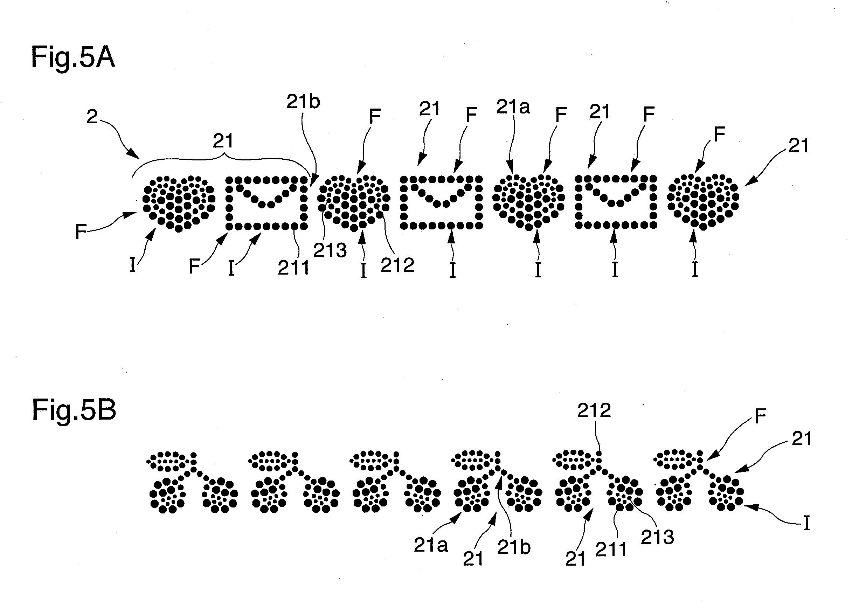

The geometry adhesive portions 21 as shown in Fig. 5A show an aspect in which the figure F and illustration I forming geometry of a "heart" by forming the curved portions 21a by the large dots 211, the intermediate dots 212 and the small dots 213, and the figure F and illustration I forming geometry that allows a "mail" to be recalled by forming the linear portions 21b by the large dots 211 are depicted. In each of the geometry adhesive portions 21 as shown in Fig. 5B, the figure F and illustration I forming geometry that allows a "cherry" to be recalled is depicted by forming the curved portions 21a and the linear portions 21b by the large dots 211, the intermediate dots 212 and the small dots 213.

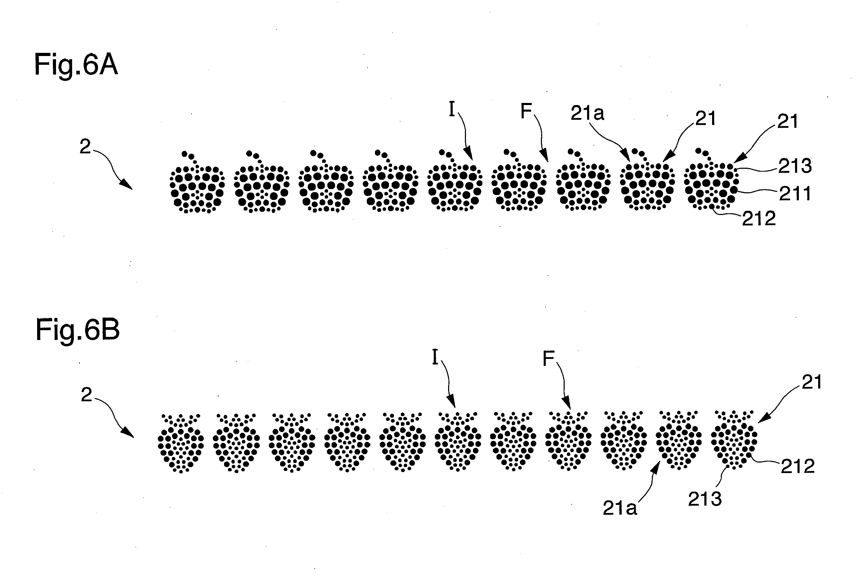

In each of the geometry adhesive portions 21 shown in Fig. 6A, the figure F and illustration I forming geometry that allows an "apple" to be recalled is depicted by forming the curved portions 21a by the large dots 211, the intermediate dots 212 and the small dots 213. In each of the geometry adhesive portions 21 shown in Fig. 6B, the figure F and illustration I forming geometry that allows a "strawberry" to be recalled is depicted by forming the curved portions 21a by the large dots 211, the intermediate dots 212 and the small dots 213.

Moreover, Fig. 7 shows an aspect in which the geometry adhesive portion 21 includes the figure F and the letters L. That is, Fig. 7A shows an aspect of having the geometry adhesive portion 21 in which katakana character which are the letters L, and a design imitating, for example, a specific mark, that is, the figure F and illustration I are depicted by forming the curved portions 21a and the linear portions 21b by the large dots 211, the intermediate dots 212 and the small dots 213, and the background adhesive portion 22 as in the above-described Fig. 4. Similarly, Fig. 7B shows the geometry adhesive portion 21 in which an alphabet which is the letter L and a design imitating a vehicle, that is, the figure F and illustration I are depicted. Fig. 7C shows an aspect of having the geometry adhesive portion 21 in which a specific mark which is the figure F and illustration I, and alphabets which are the letters L are formed, and the background adhesive portion 22 similar to the above.

As shown in Fig. 8, the geometry adhesive portion 21 may present the figure F not falling into the illustration I by the adhesive dots 2 different in dot diameter. That is, in Fig. 8, the geometry adhesive portions 21 each forming a parallelogram by aggregating the large dots 211, the intermediate dots 212 and the small dots 213 are shown. The geometry of the parallelogram in the geometry adhesive portion 21 does not fall into the illustration I "indicating a certain idea", but is included in a concept of the figure F. In Fig. 8, a unique pattern can be represented by appropriately arranging the adhesive dots 2 different in dot diameter, that is, the large dots 211, the intermediate dots 212, and the small dots 213.

In this manner, in the present embodiment, by combining the plurality of adhesive dots 2 different in dot diameter, the geometry adhesive portions 21 forming various types of geometry can be formed. Obviously, in addition to the illustrated shapes, making the shape of the dot itself rectangular, astral or heart-shape allows the geometry adhesive portions 21 capable of indicating further various ideas to be formed.

With the above-described configuration, the adhesive sheet A according to the present embodiment includes the geometry adhesive portions 21 with the adhesive dots 2 different in dot diameter aggregated, which gives non-conventional performance to a product, such as encouraging a user to buy the product, communicating a specific message to the user, and the like, so that further added-value can be given to the product itself and totally new needs can be met. Particularly, in the present embodiment, combining the adhesive dots 2 different in dot diameter allows the letter L and the figure F to be represented more clearly and abundantly. Particularly, according to the present embodiment, in the geometry adhesive portions 21 shown in Figs. 4 to 7, the geometry of the illustration I capable of transmitting some clear intention of the figure F can strongly impress the user.

In the present embodiment, forming the geometry of the letter L or the figure F by the adhesive dots 2 themselves allows the user to clearly recognize the geometry adhesive portions 21.

Moreover, in the present embodiment, providing the background adhesive portion 22 allows the user to clearly recognize the letter L or the figure F by the geometry adhesive portion 21, while a problem that in some geometry of the geometry adhesive portion 21, a reduction in application of the adhesive dots 2 leading to a decrease in sticking force is avoided, so that the sticking force can be sufficiently secured. Furthermore, according to the present embodiment, in the background adhesive portion 22, uniform dots 220 which are adhesive dots 2 having a single dot diameter are arranged at regular intervals to thereby suppress the user' s impression of the background adhesive portion 22, so that the existence of the geometry adhesive portion 21 is clearly emphasized.

In the present embodiment, in order to clearly form the geometry adhesive portion 21, and secure the excellent glue cutting property, the dot diameter of the adhesive dots 2 is set within a range of 0.5 mm to 3 mm while varying the dot diameter to form the large dots 211, the intermediate dots 212, and the small dots 213.

### <Modification>

While in the foregoing description, the geometry adhesive portion 21 forms the predetermined "letter L or figure F", or "letter L or illustration I" by the adhesive dots 2 themselves, obviously, the geometry adhesive portion 21 as described in the following modification may be employed. Among components in the above-mentioned modification, those corresponding to the above-described embodiment are given the same reference numerals, and specific descriptions thereof are not given.

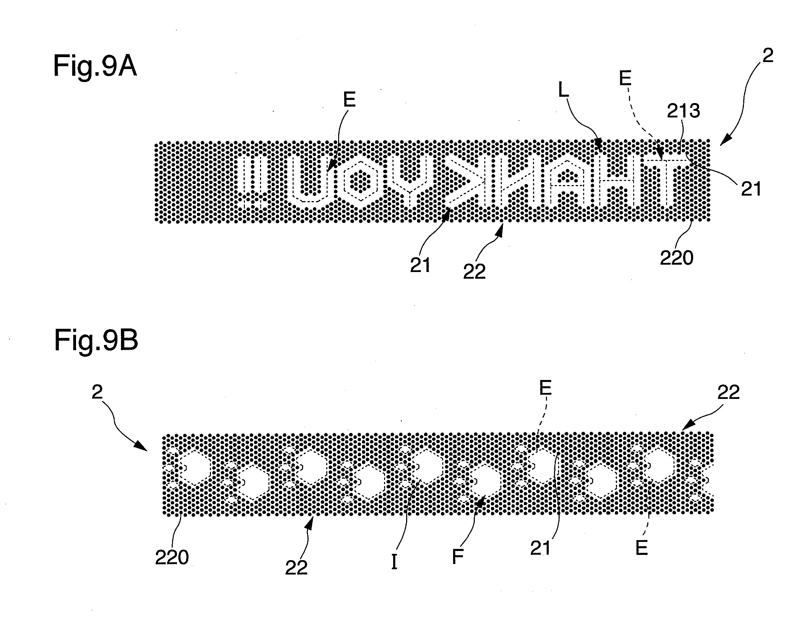

The adhesive sheet A shown in Fig. 9 according to the modification of the present embodiment is the same as that of the above-described embodiment in that it includes the sheet body 1 and the geometry adhesive portions 21 each forming the geometry of the letter L or the figure F by aggregating and arranging the adhesive dots 2 intermittently applied onto the sheet body 1, that is, in that the geometry adhesive portions 21 are provided on the sheet body 1.

Thus, each of the geometry adhesive portions 21 according to the present modification forms the letter L or the figure F by aggregating the adhesive dots 2 only in a circumference of a virtual region E corresponding to the letter L or the figure F. In other words, the letter L or the figure F is represented in "outline".

That is, in each of Figs. 9A and 9B, the small dots 213 arranged in a line in a circumference of each of the virtual regions E, which are shaped by reversing the letters L of "THANK YOU!!", and each of the virtual regions E, which are each shaped into a footprint of an animal, make up the geometry adhesive portion 21, and the uniform dots 220 having the dot diameter equal to that of the small dots, which are arranged at regular intervals around the geometry adhesive portions 21, make up the background adhesive portion 22. In the aspect of Fig. 9A, transferring the adhesive dots 2 to the adherend allows the geometry adhesive portions 21 to be transferred so that the letters L are properly read.

The foregoing also allows the letters L or the figures F to be clearly depicted and represented by the geometry adhesive portions 21.

### <Second Embodiment>

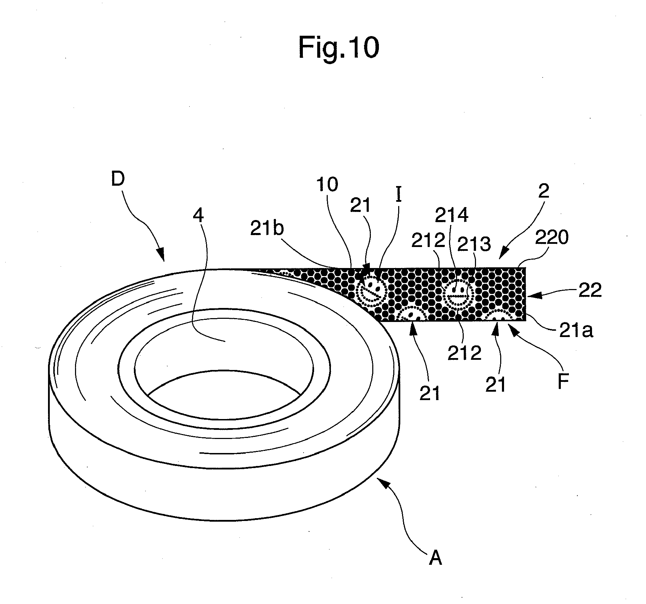

A second embodiment of the present invention shown in Fig. 10 is not limited to, for example, the adhesive sheet A in which the adhesive dots 2 are applied detachably with respect to the sheet body 1 as in the above-described embodiment and modification, but may be such that as with an adhesive tape D according to the present embodiment, the adhesive dots 2 may be applied undetachably with respect to a sheet body 10. In the same embodiment as well, components corresponding to those of the above-described embodiment are given the same reference numerals, and detailed descriptions thereof are not given.

The adhesive tape D according to the present embodiment has the adhesive sheet A having, for example, the sheet body 10 whose surface is not subjected to detachment processing, and the adhesive dots 2 undetachably applied to the sheet body 10, and a winding core 4, and is constructed by winding the adhesive sheet A around the winding core 4.

The adhesive tape D as described above also enables the user to recognize the geometry adhesive portions 21 with various letters L or figures F depicted upon use of the adhesive tape D, or for example, through the sheet body 10 when the sheet body 10 is transparent.

While in the foregoing, the embodiments of the present invention have been described, specific configurations of the respective parts are not limited only to the foregoing embodiments, but various modifications can be made within a range not departing from the gist of the present invention.

For example, in the above-described modification, that is, in Fig. 9, the geometry adhesive portions forming the illustrations indicating certain ideas among the letters and the figures are disclosed, however, the geometry adhesive portion may similarly form a circumference of geometry that forms a figure but does not fall into an illustration.

Moreover, while in the above-described embodiments, aspects applied to the transfer tool, the transfer sheet, and the adhesive tape have been disclosed, obviously, the present invention may be applied to various existing products to which an adhesive can be applied, such as a tack seal and a memo pad. Moreover, specific aspects of colors of the adhesive dots, a color of the sheet body and the like are not limited to those in the above-described embodiments, but various aspects including the existing aspects can be applied.

The specific configurations of the respective parts are not limited to those in the above-described embodiments, but various modifications can be made in a range not departing from the gist of the present invention.

The adhesive sheet according to the present invention includes a sheet body, and a geometry adhesive portion forming geometry of a letter or a figure by aggregating and arranging adhesive dots different in dot diameter, which are intermittently applied onto the sheet body. Moreover, the adhesive sheet includes a background adhesive portion made of the adhesive dots intermittently arranged around the geometry adhesive portion.

## Claims

1. An adhesive sheet comprising a sheet body and adhesive dots each of which is a dot-shaped adhesive intermittently applied onto the sheet body,
wherein a geometry adhesive portion forming geometry of a letter or a figure by aggregating and arranging the adhesive dots different in dot diameter is provided on the sheet body.

2. The adhesive sheet according to claim 1, wherein the geometry adhesive portion forms the geometry of the letter or the figure by aggregation of the adhesive dots.

3. The adhesive sheet according to claim 1 or claim 2, further comprising a background adhesive portion made of the adhesive dots intermittently arranged around the geometry adhesive portion on the sheet body.

4. The adhesive sheet according to claim 3, wherein in the background adhesive portion, the adhesive dots having a single dot diameter are arranged at regular intervals.

5. The adhesive sheet according to any one of claims 1 to 4, wherein the dot diameter is set to 0.5 mm to 3 mm.

6. An adhesive sheet comprising a sheet body and adhesive dots each of which is a dot-shaped adhesive intermittently applied onto the sheet body,
wherein a geometry adhesive portion in which geometry of a letter or an illustration is depicted by aggregation of the adhesive dots is provided on the body sheet.

7. An adhesive sheet comprising a sheet body and adhesive dots each of which is a dot-shaped adhesive intermittently applied onto the sheet body,
wherein a geometry adhesive portion forming geometry of a letter or a figure by aggregating and arranging the adhesive dots is provided on the sheet body, and
the geometry adhesive portion forms the letter or the figure by aggregating the adhesive dots only in a circumference of a virtual region corresponding to the letter or the figure.

8. The adhesive sheet according to any one of claims 1 to 7, wherein the adhesive dots are applied detachably with respect to the sheet body.

9. The adhesive sheet according to any one of claims 1 to 7, wherein the adhesive dots are applied undetachably with respect to the sheet body.

10. A transfer tool comprising the adhesive sheet according to any one of the claims 1 to 8.
